# EUROPEAN PATENT SPECIFICATION

(11) **EP 0 231 106 B1**
(45) Date of publication and mention of the grant of the patent: **27.01.1993**
(21) Application number: 87300573.0
(22) Date of filing: 22.01.1987
(51) Int. Cl.: H04N 5/783, H04N 5/93, H04N 9/87

(54) **Magnetic recording and/or reproducing apparatus and methods**
Verfahren und Vorrichtung zur magnetischen Aufzeichnung und Wiedergabe
Procédé et appareil pour l'enrégistrement et la réproduction magnétique

(30) Priority: 22.01.1986 JP 10223/86
(43) Date of publication of application: 05.08.1987
(73) Proprietor: SONY CORPORATION, Tokyo 141 (JP)
(72) Inventor: Fukuda, Tokuya c/o Patents Division Sony Corp., Tokyo 141 (JP); Aoki, Takamitsu c/o Patents Division Sony Corp., Tokyo 141 (JP)
(74) Representative: Pilch, Adam John Michael

(56) References cited:
- EP-A- 0 102 809
- EP-A- 0 136 816
- PATENT ABSTRACTS OF JAPAN, volume 6, no. 251 (E-147) (1129) 10th December 1982; JP-A-57 150 286 (NIPPON VICTOR K.K.) 17-09-1982

## Description

This invention relates to magnetic recording and/or reproducing apparatus and methods.

In a helical scan type video tape recorder (VTR) which carries out recording and reproduction of a video signal by means of at least one rotary magnetic head, the video signal corresponding to one field may be sequentially recorded at a predetermined azimuth angle of the head on each slanted recording track on a magnetic tape. A four-head type VTR has previously been used in which a pair of normal or main playback heads are alternated with a pair of auxiliary heads, each having an inverse azimuth angle with respect to each main playback head and used for variable speed reproduction so that a variable speed reproduction operation can be carried out.

When variable speed reproduction is carried out by this kind of VTR, for example an 8 mm VTR, the continuity of the horizontal synchronization (H) can be maintained, even in a track jump operation, provided that recorded positions of horizontal synchronization signals of the video signal on the magnetic tape are aligned between adjacent tracks, in other words if a record format is provided which has taken a horizontal synchronization alignment. The horizontal synchronization alignment is represented by a distance between respective record starting points of adjoining tracks divided by a length of one horizontal synchronization period. For example, in the NTSC system, if the value of the horizontal synchronization (H) alignment = 0.5H x (odd number), since one field = 262.5H, the tracks will be completely aligned.

On the other hand, in a record format which deviates from horizontal synchronization alignment between adjoining tracks, it is necessary to delay the reproduced video signal from the recorded tracks by a constant interval of time in order to correct for the deviation of the horizontal synchronization alignment.

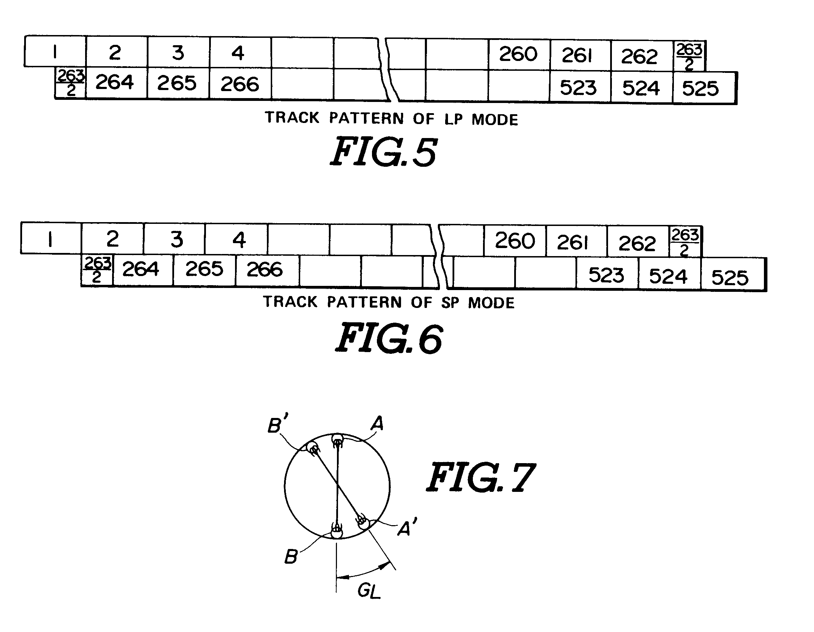

For example, an 8 mm VTR has a LP (Long Play) mode record format which assumes a horizontal synchronization alignment (0.5H alignment) as shown in Figure 5 of the accompanying drawings, and an SP (Standard Play) mode record format in which the horizontal synchronization alignment is deviated (1.0H alignment) as shown in Figure 6 of the accompanying drawings.

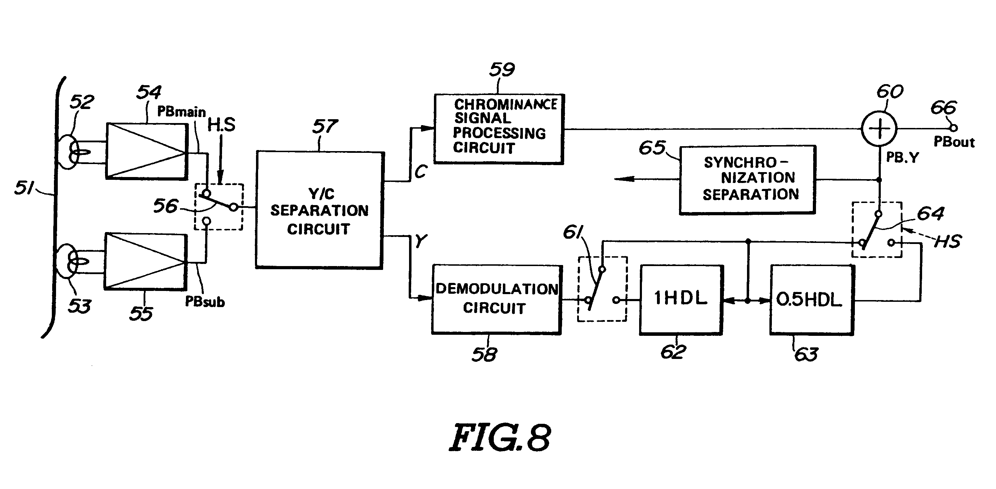

Figure 7 of the accompanying drawings shows a previously-proposed head arrangement of a four-head type 8 mm VTR in a rotary drum. Referring to Figure 7, suppose that a gap interval (GL) between each main playback head A,B and each auxiliary head A',B' used for variable speed reproduction corresponds to two horizontal synchronization intervals or 2H. It is then necessary to delay the reproduced video signal by 0.5H to correct for the deviation of the horizontal synchronization alignment when the reproduced video signal is derived from the auxiliary heads A',B' in the SP track pattern mode. Therefore, in the previously-proposed method, as shown in Figure 8 of the accompanying drawings, an 8 mm VTR having a variable speed reproduction operation mode is provided with a 0.5H delay line 63 having a delay corresponding to 0.5H in the processing system for the reproduced luminance signal PB.Y, so that continuity of horizontal synchronization is assured.

With further reference to Figure 8, a reproduced video signal PBmain derived via a normal or main playback head 52 from a magnetic tape 51 and another reproduced video signal PBsub derived via an auxiliary head 53 are amplified by means of respective playback amplifiers 54,55 and sent to a Y/C separation circuit 57 via a signal selection switch 56.

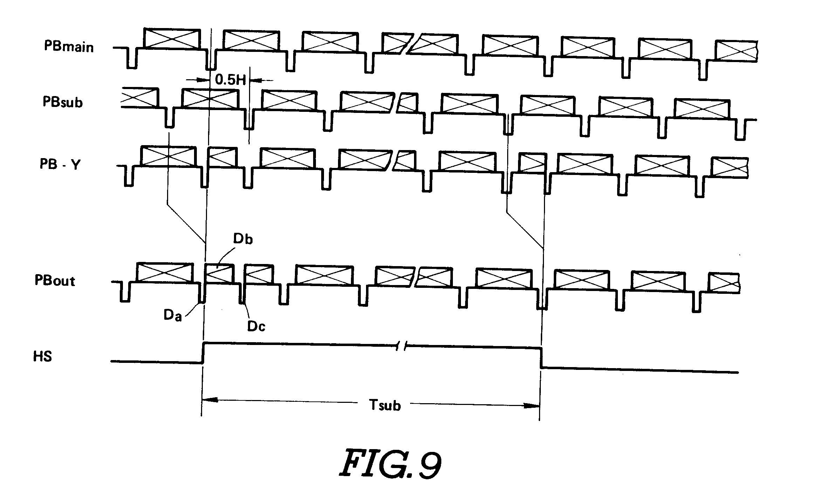

Figure 9 of the accompanying drawings shows a timing chart indicating the operation of the 8 mm VTR shown in Figure 8. It is noted that, in the SP mode, the reproduced video signal PBmain derived from the main playback head 52 is reproduced 0.5H in advance of the reproduced video signal PBsub obtained from the auxiliary head 53, as shown in Figure 9.

The selection switch 56 is responsive to a head select signal HS to select either of the two reproduced video signals. The timing of the head select signal HS is such that one of the reproduced video signals PBmain, PBsub is selected, which have been derived during the tracing of the main playback head 52 and the auxiliary playback head 53 on their corresponding azimuth angle recorded tracks, when variable speed reproduction is carried out.

The Y/C separation circuit 57 separates the reproduced video signal received via the signal selection switch 56 into a luminance signal Y and a chrominance signal C. The luminance signal Y is sent to a demodulation circuit 58. The chrominance signal C is sent to a signal mixer 60 via a chrominance signal processing circuit 59. The reproduced luminance signal PB.Y derived from the demodulation circuit 58 is sent to a 1H delay line (1H DL) 62 or to a 0.5H delay line (0.5H DL) 63 via a signal selection switch 61 for drop out compensation. Furthermore, the delayed luminance signal PB.Y is sent to a synchronization separation circuit 65.

A signal selection switch 64 is responsive to the head select signal HS together with the signal selection switch 56 in the variable reproduction operation mode. The reproduced luminance signal PB.Y is sent to the synchronization separation circuit 65 and to the signal mixer 60 via the 0.5H delay line 63 during a selected interval Tsub of the auxiliary head 53. It is to be noted that the signal selection switch 61 and the 1H delay line 62 constitute a drop out compensation circuit in a normal speed reproduction operation mode. When a drop out occurs, the reproduced luminance signal PB.Y with a 1H delay is sent to the synchronization separation circuit 65 and to the signal mixer 60. The signal mixer 60 synthesizes a reproduced video signal PBout from the reproduced chrominance signal and luminance signal, and outputs the reproduced video signal PBout via a signal output terminal 66.

In the previously-proposed 8 mm VTR in which the continuity of horizontal synchronization is assured in the variable speed reproduction mode by the provision of a 0.5H delay line in the processing system of the reproduced luminance signal PB.Y, only the luminance signal Y can be corrected. In addition, as shown in Figure 9, an out-of-synchronization part (Da), an image deviation part (Db), and a black colour drop part (Dc) occur in the reproduced video signal PBout, so that the variable speed reproduction operation cannot be carried out with good picture quality.

European Patent Application No. EP-A-0 136 816 describes a prior art delay time control apparatus in which a cyclically varying delay is applied to a replayed video signal when a head change is made. The delay remains constant throughout the period of operation of a single replay head.

According to one aspect of the present invention there is provided a magnetic recording and/or reproducing apparatus having a main record and/or playback magnetic head and being operable in a variable speed reproduction mode in which a video signal is recorded in accordance with a record format in which the horizontal synchronization alignment deviates between adjoining tracks, the apparatus comprising:
(a) at least one auxiliary rotary magnetic head which can be selectively used in place of the main record and/or playback magnetic head in the variable speed reproduction mode;
(b) a delay circuit for receiving a reproduced video signal and delaying it by an amount corresponding to one horizontal synchronization interval and having a first output terminal through which the reproduced video signal delayed by one horizontal synchronization interval is output, the delay circuit also being operable to delay the reproduced video signal by a delay corresponding to the deviation of the horizontal synchronization alignment and having a second output terminal through which the reproduced video signal delayed by the amount corresponding to the deviation of the horizontal synchronization alignment is output; and
(c) switch circuitry which is operable sequentially to select the reproduced video signal from between those reproduced by the main and the auxiliary magnetic heads to be sent to the delay circuit and also to select the reproduced video signal from the first output terminal of the delay circuit providing a delay of one horizontal synchronization interval during a first portion of an interval during which the auxiliary head is selected, and then to select the reproduced video signal from the second output terminal of the delay circuit providing a delay corresponding to the deviation of the horizontal synchronization alignment during the remaining portion of the interval during which the auxiliary head is selected in the variable speed reproduction mode, so as to output the reproduced video signal with continuity of the horizontal synchronization alignment in the variable speed reproduction mode.

According to another aspect of the present invention there is provided a magnetic recording and/or reproducing method in which a video signal is recorded in accordance with a record format in which the horizontal synchronization alignment deviates between adjoining tracks, the method comprising the steps of:
(a) selecting between video signals reproduced by a main record and/or playback head or an auxiliary head, delaying the selected reproduced video signal by an amount corresponding to one horizontal synchronization interval, and outputting the delayed signal from a first output terminal;
(b) selecting between the reproduced video signals, delaying the selected reproduced video signal by an amount corresponding to the deviation of the horizontal synchronization alignment and outputting the reproduced video signal delayed by the amount corresponding to the deviation of the horizontal synchronization alignment from a second output terminal; and
(c) selecting the delayed reproduced video signal from the first output terminal with a delay corresponding to one horizontal synchronization interval during a first portion of an interval during which the auxiliary head is selected, and then selecting the reproduced video signal from the second output terminal with the delay corresponding to the deviation of the horizontal synchronization alignment during the remaining portion of the interval during which the auxiliary head is selected in the variable speed reproduction mode, and outputting the selected delayed reproduced video signal with continuous horizontal synchronization alignment in the variable speed reproduction mode.

A preferred embodiment of the present invention, to be described in greater detail hereinbelow, provides a magnetic recording and/or reproducing apparatus of the type having an operation mode in which the video signal is recorded in a record format with a deviation in the horizontal synchronization alignment between mutually adjoining tracks, but which is nevertheless capable of carrying out a variable speed reproduction operation with good picture quality and without the occurrence of out-of-synchronization, image deviation, or black colour drop parts in the reproduced video signal during the variable speed reproduction operation.

The invention will now be described by way of example with reference to the accompanying drawings, in which:
Figure 1 is a circuit block diagram of a reproduction system in an 8 mm magnetic recording and reproducing apparatus according to a preferred embodiment of the present invention;
Figure 2 is a signal timing chart for explaining the operation of the preferred embodiment shown in Figure 1;
Figure 3 is a circuit block diagram of a main part of a first modification of a delay circuit shown in Figure 1;
Figure 4 is a circuit block diagram of a main part of a second modification of the delay circuit shown in Figure 1;
Figure 5 is a schematic diagram of a record format in an LP mode in a previously-proposed 8 mm VTR;
Figure 6 is a schematic diagram of a record format in an SP mode in the previously-proposed 8 mm VTR;
Figure 7 is a schematic diagram of a head arrangement in the previously-proposed 8 mm VTR;
Figure 8 is a circuit block diagram of the reproduction system in a previously-proposed 8 mm VTR having a variable speed reproduction function; and
Figure 9 is a timing chart of signals in the previously-proposed VTR shown in Figure 8.

A previously-proposed 8 mm video tape recorder (VTR) has been described with reference to Figures 5 to 9.

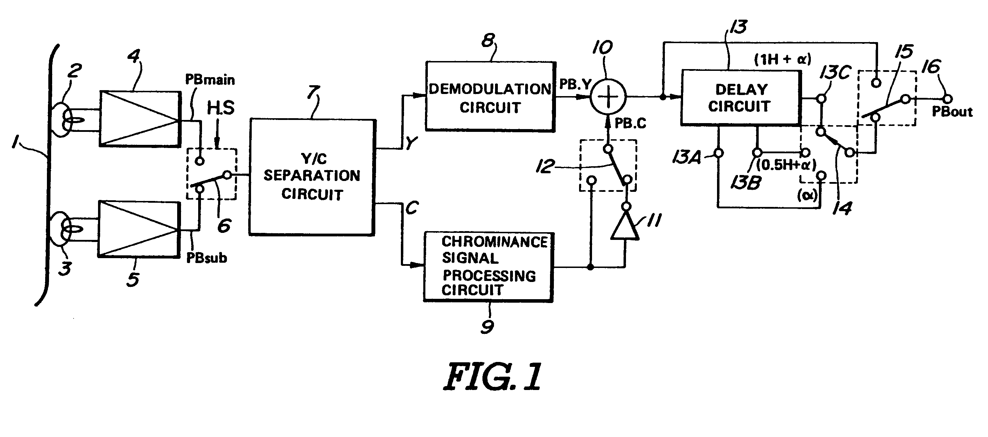

Figure 1 shows a circuit block diagram of a preferred reproduction system in an 8 mm VTR. In this embodiment, a reproduced main video signal PBmain derived from a magnetic tape 1 via a main playback head 2 and a reproduced auxiliary video signal PBsub derived via an auxiliary head 3 are amplified by means of separate playback amplifiers 4,5, respectively. A selected one of the amplified reproduced video signals is sent to a Y/C separation circuit 7 via a signal selection switch 6.

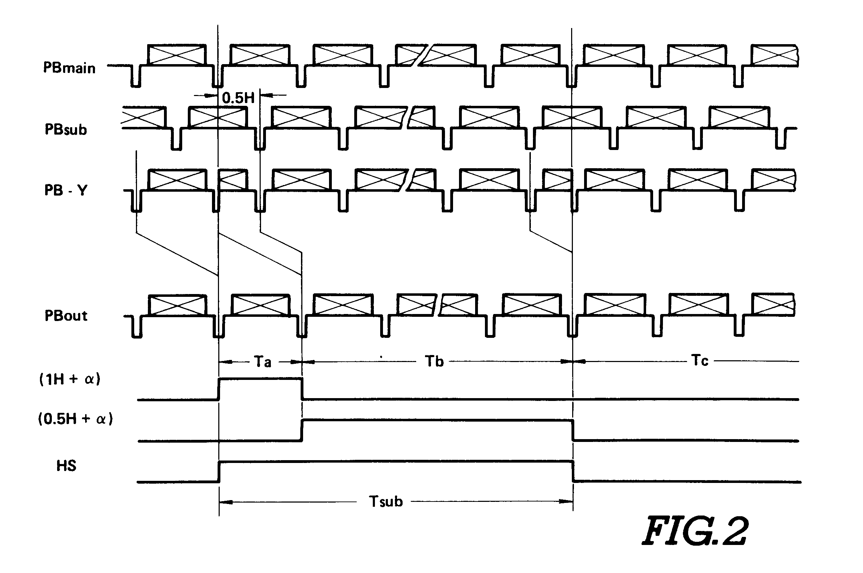

Figure 2 shows a signal timing chart of the signals in the 8 mm VTR shown in Figure 1, when in the Standard Play (SP) mode.

It will be noted from Figure 2 that the main video signal PBmain recorded on the magnetic tape 1 and derived from the main playback head 2 is reproduced only 0.5H (0.5 of a horizontal synchronization interval) in advance of the reproduced auxiliary video signal PBsub recorded on the magnetic tape 1 and derived from the auxiliary head 3, in the SP mode.

The Y/C separation circuit 7 separates the reproduced video signal received via the signal selection switch 6 into a luminance signal Y and a chrominance signal C in the same way as the previously-proposed 8 mm VTR shown in Figure 8. The separated luminance signal Y is sent to a demodulation circuit 8, and the chrominance signal C is sent to a chrominance signal processing circuit 9, also in the same way as in the previously-proposed 8 mm VTR. The reproduced luminance signal PB.Y derived from the demodulation circuit 8 is sent to a signal mixer 10. In addition, the reproduced chrominance signal PB.C derived from the chrominance signal processing circuit 9 is sent directly to one terminal of a signal selection switch 12 and to another terminal of the switch 12 via an inverter 11. The reproduced chrominance signal PB.C is then sent to the signal mixer 10 via the signal selection switch 12. The signal mixer 10 forms a video signal by mixing the reproduced luminance signal PB.Y and the reproduced chrominance signal PB.C, and the mixed video signal is sent to a delay circuit 13 and to one terminal of a signal selection switch 15.

The delay circuit 13, as shown in Figure 1, comprises a first delay output terminal 13A from which is output the video signal from the signal mixer 10 but delayed by a predetermined amount α, a second delay output terminal 13B from which is output the video signal from the signal mixer 10 but delayed by an amount 0.5H+α (corresponding to the sum of the deviation of the H alignment and the predetermined amount α), and a third delay output terminal 13C from which is output the video signal from the signal mixer 10 but delayed by an amount 1H + α (which corresponds to the sum of one horizontal synchronization interval and the predetermined amount α). Each delayed output video signal derived from the first, second and third delay output terminals 13A, 13B, 13C in the delay circuit 13 is selected by means of a signal selection switch 14 and the selected, delayed video signal is sent to another terminal of the signal selection switch 15 which is connected to a signal output terminal 16 at which an output signal PBout is provided.

Referring again to Figures 1 and 2, the signal selection switch 6 is controlled in response to a head select signal HS in the same way as in the previously-proposed 8 mm VTR shown in Figure 8. The head select signal HS selects either of the reproduced video signals PBmain, PBsub derived during the trace over record tracks having azimuths respectively corresponding to the main playback head 2 and the auxiliary head 3. In addition, the signal selection switch 14 is controlled so as to select any one of the respective delay output video signals derived from the delay circuit 13. That is to say, as shown in Figure 2, the signal selection switch 14 selects the delayed output video signal with a delay amount 1H + α derived from the third delay output terminal 13C during the first 1H (one horizontal synchronization) interval Ta of a selection interval Tsub at which the head select signal HS controls the switch 6 so as to select one side of the auxiliary head 3, selects the delayed output video signal with a delay amount 0.5H + α derived from the second delay output terminal 13B during the remaining interval Tb of the selection interval Tsub, and selects the delayed output video signal with a delay amount α derived from the first delay output terminal 13A during another interval Tc which extends over the remaining time, except for that assigned to the selection interval Tsub for the auxiliary head 3.

The signal selection switch 12 selects the reproduced chrominance signal PB.Y derived from the chrominance signal processing circuit 9. The selection switch 12 selects a phase inverted (180°) output signal derived from the inverter 11 during the first 1H interval Ta during which the signal selection switch 14 selects the above-described delayed 1H + α output video signal from the third delay output terminal 13C.

The signal selection switch 15 selects either the video signal sent directly from the signal mixer 10 or the video signal derived from the signal selection switch 14 for which the corresponding predetermined delay amount (described above) is provided. The signal selection switch 15 is controlled so as to select the video signal sent directly from the signal mixer 10 in the normal playback operation mode, and to select the delayed video signal from the delay circuit 13 in the variable speed reproduction operation mode.

It should be noted that the signal selection switches are all controlled by a system controller (not shown).

The continuity of the horizontal synchronization H is corrected in such a way that each signal selection switch 6, 12 and 14 is controlled so as to select each input signal as described above in the variable speed reproduction operation mode. As shown in the timing chart of Figure 2, a reproduced video signal PBout which provides good picture quality can be obtained through the signal output terminal 16, without generation of out-of synchronization, image deviation, and black colour drop parts in the video images.

It should be noted that the predetermined delay amount α , typically substantially in a range of from zero to 0.5H, set in the delay circuit 13 is provided so as to impart an operation characteristic of the delay circuit 13 to each signal, whereby the gain and temperature characteristics of the delay circuit 13 do not affect each delayed output video signal from the delay circuit with respect to a no-delay video signal, namely one not passed through the delay circuit 13. The predetermined delay amount α may alternatively be zero.

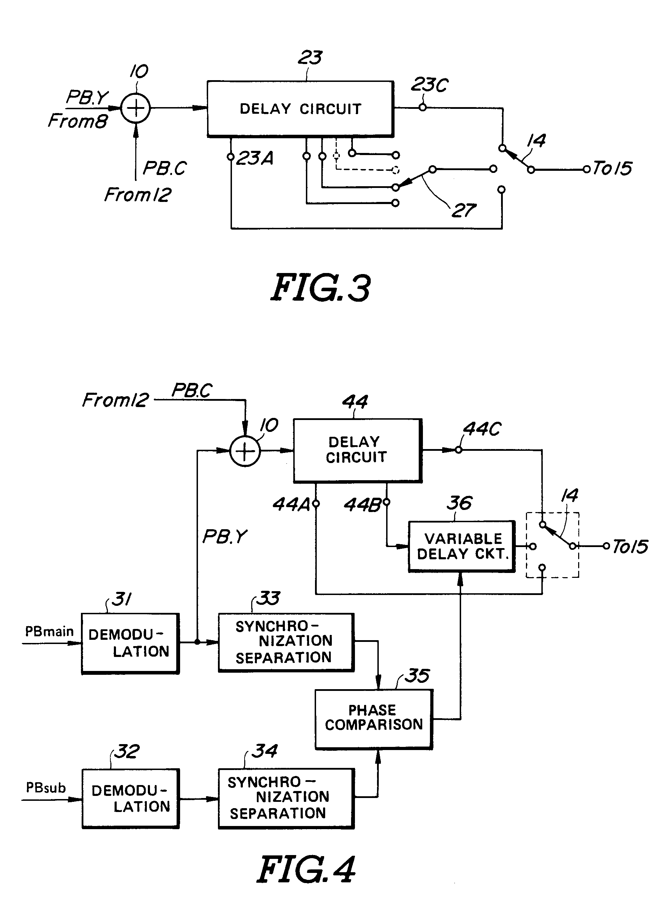

Figure 3 shows a first modification of the delay circuit 13 shown in Figure 1. Connections to the other circuits are the same as those shown in Figure 1.

If a skew occurs during the switching operation of the head select signal HS due to jitter or the like, the time axis of the reproduced video signal becomes discontinuous and therefore noise may occur in the video signal. For example, in the 8 mm VTR, a skew of approximately 2µsec occurs. The influence of the skew on the time axis may be prevented by using a modified delay circuit 23 as shown in Figure 3 which is provided with a plurality of output taps through which delay amounts in the vicinity of 0.5H are derived, and an additional signal selection switch 27 outputs selectively one of the delayed output signals having a delay amount in the vicinity of 0.5H derived from one of the above-described output taps. It should be noted that the first output terminal 23A corresponds to the first output terminal 13A and the third output terminal 23C corresponds to the third output terminal 13C.

Figure 4 shows another modification of the delay circuit 13 shown in Figure 1. Connections to the other circuits are the same as those shown in Figure 1.

As shown in Figure 4, in order to detect the skew occurring in the selection between the main playback head 2 and the auxiliary head 3, luminance signal demodulation circuits 31,32 and synchronization separation circuits 33,34 exclusively used for the reproduced video signals PBmain, PBsub, respectively, are provided. A phase comparator 35 carries out a phase comparison between each of the synchronization signals derived from the two synchronization separation circuits 33,34. A delay circuit 44 includes output terminals 44A,44B,44C, and the output terminal 44B is used to produce the reproduced video signal having a delay amount in the vicinity of 0.5H via a variable delay circuit 36 in which a delay amount is variably controlled according to a phase error amount derived from the phase comparator 35. Consequently, the above-described skew is automatically compensated for so that the 8 mm VTR can achieve variable speed reproduction operation with better picture quality. The remainder of the circuit shown in Figure 4 is similar to those of Figures 1 and 2.

As will be appreciated from the above-described preferred embodiment, such magnetic recording and reproducing apparatus can provide a reproduced video signal providing extremely good picture quality, the continuity of the horizontal synchronization H being secured without generation of out-of-synchronization, image deviation, and black colour drop parts in the video image during variable speed reproduction operation.

## Claims

1. Magnetic recording and/or reproducing apparatus having a main record and/or playback magnetic head (2) and being operable in a variable speed reproduction mode in which a video signal is recorded in accordance with a record format in which the horizontal synchronization alignment deviates between adjoining tracks, the apparatus comprising:
(a) at least one auxiliary rotary magnetic head (3) which can be selectively used in place of the main record and/or playback magnetic head (2) in the variable speed reproduction mode;
(b) a delay circuit (13;23;44) for receiving a reproduced video signal and delaying it by an amount corresponding to one horizontal synchronization interval (1H) and having a first output terminal (13C;23C;44C) through which the reproduced video signal delayed by one horizontal synchronization interval is output, the delay circuit (13;23;44) also being operable to delay the reproduced video signal by a delay corresponding to the deviation of the horizontal synchronization alignment and having a second output terminal (13B;23B;44B) through which the reproduced video signal delayed by the amount corresponding to the deviation of the horizontal synchronization alignment is output; and
(c) switch circuitry (6,14) which is operable sequentially to select the reproduced video signal from between those reproduced by the main and the auxiliary magnetic heads (2,3) to be sent to the delay circuit (13;23;44) and also to select the reproduced video signal from the first output terminal (13C;23C;44C) of the delay circuit (13;23;44) providing a delay of one horizontal synchronization interval (1H) during a first portion (Ta) of an interval (Tsub) during which the auxiliary head (3) is selected, and then to select the reproduced video signal from the second output terminal (13B;23B;44B) of the delay circuit (13;23;44) providing a delay corresponding to the deviation of the horizontal synchronization alignment during the remaining portion (Tb) of the interval (Tsub) during which the auxiliary head (3) is selected in the variable speed reproduction mode, so as to output the reproduced video signal with continuity of the horizontal synchronization alignment in the variable speed reproduction mode.

2. Apparatus according to claim 1, wherein the delay circuit (13;23;44) has a third output terminal (13A;23A;44A) providing the reproduced video signal delayed by a predetermined delay (α) substantially in a range of from zero to the deviation of the horizontal synchronization alignment, and wherein the switch circuitry (6,14) is operable to select the reproduced video signal with the predetermined delay (α) derived from the third output terminal of the delay circuit during another interval (Tc) when the auxiliary head (3) is not selected in the variable speed reproduction mode.

3. Apparatus according to claim 2, wherein the first output terminal (13C;23C;44C) of the delay circuit (13;23;44) is operable to output the delayed reproduced video signal with a delay corresponding to one horizontal synchronization interval (1H) plus the predetermined delay (α), and the second output terminal (13B;23B;44B) thereof is operable to output the delayed reproduced video signal with a delay corresponding to half of a horizontal synchronization interval (0.5H) deviation of the horizontal synchronization alignment plus the predetermined delay (α).

4. Apparatus according to claim 3, wherein the main record and/or playback head (2) has an inverse azimuth with respect to the auxiliary head (3) and the reproduced video signal (PBmain) derived from the main record and/or playback head (2) is half of a horizontal synchronization interval (0.5H) in advance of the reproduced video signal (PBsub) derived from the auxiliary head (3).

5. Apparatus according to claim 2, claim 3 or claim 4, wherein the predetermined delay (α) is chosen with gain and temperature characteristics of the delay circuit (13) taken into account so that the gain and temperature characteristics do not affect the reproduced video signal passed through the delay circuit (13) relative to the reproduced video signal not passed through the delay circuit (13).

6. Apparatus according to any one of claims 2 to 5, wherein the predetermined delay (α) is zero.

7. Apparatus according to claim 1, wherein the delay circuit (23) further comprises a plurality of output taps from which the reproduced video signals are output with individual delays substantially in the vicinity of half of a horizontal synchronization interval (0.5H) and a signal selection switch (27) connected between the plurality of output taps and the second output terminal of the delay circuit (23) for selecting any one of the reproduced signals derived from the output taps according to skew occurring during the selection of the auxiliary head (3) in the variable speed reproduction mode.

8. Apparatus according to claim 1, comprising skew detection means (31 to 35) for detecting skew between the main record and/or playback head (2) and the auxiliary head (3) and operable to output a signal indicative thereof, and a variable delay circuit (36) responsive to the output signal from the skew detection means (31 to 35) and which is provided between the second output terminal (44B) of the delay circuit (44) and the switch circuitry (6,14) for providing a further delay added to the reproduced signal from the second output terminal (44B), which further delay is varied according to the magnitude of the skew detected by the skew detection means (31 to 35).

9. Apparatus according to claim 8, wherein the skew detection means comprises two luminance signal demodulators (31,32) and two synchronization separation circuits (33,34) respectively receiving the reproduced video signals (PBmain, PBsub) derived from the main record and/or playback head (2) and the auxiliary head (3), and a phase comparator (35) operable to compare the phases between the respective synchronization signals derived from the synchronization separation circuits (33,34) and to output a phase error signal to the variable delay circuit (36).

10. A magnetic recording and/or reproducing method in which a video signal is recorded in accordance with a record format in which the horizontal synchronization alignment deviates between adjoining tracks, the method comprising the steps of:
(a) selecting between video signals (PBmain, PBsub) reproduced by a main record and/or playback head (2) or an auxiliary head (3), delaying the selected reproduced video signal by an amount corresponding to one horizontal synchronization interval (1H), and outputting the delayed signal from a first output terminal (13C;23C;44C);
(b) selecting between the reproduced video signals (PBmain, PBsub), delaying the selected reproduced video signal by an amount corresponding to the deviation of the horizontal synchronization alignment and outputting the reproduced video signal delayed by the amount corresponding to the deviation of the horizontal synchronization alignment from a second output terminal (13B;23B;44B); and
(c) selecting the delayed reproduced video signal from the first output terminal (13C;23C;44C) with a delay corresponding to one horizontal synchronization interval (1H) during a first portion (Ta) of an interval (Tsub) during which the auxiliary head (3) is selected, and then selecting the reproduced video signal from the second output terminal (13B;23B;44B) with the delay corresponding to the deviation of the horizontal synchronization alignment during the remaining portion (Tb) of the interval (Tsub) during which the auxiliary head (3) is selected in the variable speed reproduction mode, and outputting the selected delayed reproduced video signal with continuous horizontal synchronization alignment in the variable speed reproduction mode.

11. A method according to claim 10, comprising delaying the selected reproduced video signal by a predetermined delay (α) substantially in a range of from zero to the deviation of the horizontal synchronization alignment and outputting said signal at a third output terminal (13A;23A;44A), and wherein the step of selecting from among the delayed reproduced video signals comprises selecting the delayed reproduced video signal with the predetermined delay (α) from the third output terminal (13A;23A;44A) during an interval (Tc) when the auxiliary head (3) is not selected as the source of the reproduced video signals to be delayed in the variable speed reproduction mode.

12. A method according to claim 11, wherein the step of outputting the delayed reproduced video signal from the first output terminal (13C;23C;44C) comprises outputting the reproduced video signal with a delay corresponding to one horizontal synchronization interval (1H) plus the predetermined delay (α), and the step of outputting the delayed reproduced video signal from the second output terminal (13B;23B;44B) comprises outputting the reproduced video signal with a delay corresponding to half of a horizontal synchronization interval (0.5H) deviation of the horizontal synchronization alignment plus the predetermined delay (α).

13. A method according to claim 12, wherein the main record and/or playback head (2) has an inverse azimuth with respect to the auxiliary head (3) and the reproduced video signal (PBmain) selected from the main record and/or playback head (2) is half of a horizontal synchronization interval (0.5H) in advance of the reproduced video signal (PBsub) selected from the auxiliary head (3).

14. A method according to claim 12 or claim 13, wherein the predetermined delay (α) is zero.

15. A method according to claim 10, comprising outputting the reproduced video signal from a plurality of output taps of the delay circuit (23) with individual delay amounts substantially in the vicinity of half of a horizontal synchronization interval (0.5H) and selecting any one of the reproduced signals derived from the output taps according to skew occurring during the selection of the auxiliary head (3) as the source of the reproduced video signal to be delayed in the variable speed reproduction mode.

16. A method according to claim 10, comprising detecting (31 to 35) skew between the main record and/or playback head (2) and the auxiliary head (3), and providing (36) a further delay added to the reproduced signal from the second output terminal (44B), which further delay is varied according to the magnitude of the detected skew.

17. A method according to claim 16, wherein the skew detecting step comprises demodulating (31,32) the luminance signals from the reproduced video signals derived from the main record and/or playback head (2) and the auxiliary head (3), separating (33,34) the synchronization signals from each of the demodulated luminance signals, and comparing (35) the phases between the respective synchronization signals to detect the skew.

## Patentansprüche

1. Vorrichtung zur magnetischen Aufzeichnung und/oder Wiedergabe, die einen Haupt-Aufzeichnungs- und/oder Wiedergabe-Magnetkopf (2) hat und in einer Wiedergabebetriebsart mit veränderbarer Geschwindigkeit betreibbar ist, in der ein Videosignal in Übereinstimmung mit einem Aufzeichnungsformat aufgezeichnet wird, bei dem die Horizontalsynchronisierungsabgleichung zwischen nebeneinanderliegenden Spuren eine Abweichung aufweist, welche Vorrichtung umfaßt:
(a) zumindest einen Hilfs-Drehmagnetkopf (3), der wahlweise anstelle des Haupt-Aufzeichnungs- und/oder Wiedergabe-Magnetkopfes (2) in der Wiedergabebetriebsart mit veränderbarer Geschwindigkeit benutzt werden kann,
(b) eine Verzögerungsschaltung (13; 23; 44) zum Aufnehmen eines wiedergegebenen Videosignals und zum Verzögern desselben um einen Betrag, der einem Horizontalsynchronisierungsintervall (1H) entspricht, welche Verzögerungsschaltung einen ersten Ausgangsanschluß (13C; 23C; 44C), über den das wiedergegebene Videosignal, das um ein Horizontalsynchronisierungsintervall verzögert ist, ausgegeben wird, wobei die Verzögerungsschaltung (13; 23; 44) auch betreibbar ist, um das wiedergegebene Videosignal um einen Verzögerungsbetrag zu verzögern, der der Abweichung der Horizontalsynchronisierungsabgleichung entspricht, und einen zweiten Ausgangsanschluß (13B; 23B; 44B) hat, über den das wiedergegebene Videosignal, das um den Betrag verzögert ist, welcher der Abweichung der Horizontalsynchronisierungsabgleichung entspricht, ausgegeben wird, und
(c) eine Schalteinrichtung (6, 14), die betreibbar ist, um aufeinanderfolgend das wiedergegebene Videosignal aus solchen auszuwählen, die durch die Haupt- und Hilfs-Magnetköpfe (2, 3) wiedergegebenen werden, um sie an die Verzögerungsschaltung (13; 23; 44) zu liefern, und um außerdem das wiedergegebene Videosignal von dem ersten Ausgangsanschluß (13C; 23C; 44C) der Verzögerungsschaltung (13; 23; 44), die eine Verzögerung von einem Horizontalsynchronisierungsintervall (1H) während eines ersten Teils (Ta) eines Intervalls (Tsub) erzeugt, während welchem der Hilfs-Magnetkopf (3) ausgewählt ist, und dann das wiedergegebene Videosignal von dem zweiten Ausgangsanschluß (13B; 23B; 44B) der Verzögerungsschaltung (13; 23; 44), die eine Verzögerung entsprechend der Abweichung der Horizontalsynchronisierungsabgleichung während des verbleibenden Teils (Tb) des Intervalls (Tsub) erzeugt, während welchem der Hilfs-Magnetkopf (3) in der Wiedergabebetriebsart mit veränderbarer Geschwindigkeit ausgewählt ist, auszuwählen, um so das wiedergegebene Videosignal mit Stetigkeit der Horizontalsynchronisierungsabgleichung in der Wiedergabebetriebsart mit veränderbarer Geschwindigkeit auszugeben.

2. Vorrichtung nach Anspruch 1, bei der die Verzögerungsschaltung (13; 23; 44) einen dritten Ausgangsanschluß (13A; 23A; 44A) hat, der das wiedergegebene Videosignal, das um einen vorbestimmten Betrag der Verzögerung (α) im wesentlichen in einem Bereich von Null bis zu der Abweichung der Horizontalsynchroniserungsabgleichung verzögert ist, bereitstellt, und bei der die Schalteinrichtung (6, 14) betreibbar ist, um das wiedergegebene Videosignal mit dem vorbestimmten Betrag der Verzögerung (α), das von dem dritten Ausgangsanschluß der Verzögerungsschaltung abgenommen wird, während eines weiteren Intervalls (Tc) auszuwählen, wenn der Hilfs-Magnetkopf (3) nicht in der Wiedergabebetriebsart mit veränderbarer Geschwindigkeit ausgewählt ist.

3. Vorrichtung nach Anspruch 2, bei der der erste Ausgangsanschluß (13C; 23C; 44C) der Verzögerungsschaltung (13; 23; 44) schaltbar ist, um das verzögerte wiedergegebene Videosignal mit einer Verzögerung auszugeben, die einem Horizontalsynchronisierungsintervall (1H) plus dem vorbestimmten Betrag der Verzögerung (α) entspricht, und der zweite Ausgangsanschluß (13B; 23B; 44B) betreibbar ist, um das verzögerte wiedergegebene Videosignal mit einer Verzögerung auszugeben, die der Hälfte einer Horizontalsynchronisierungsintervall- (0,5H-)Abweichung der Horizontalsynchronisierungsabgleichung plus dem vorbestimmten Betrag der Verzögerung (α) entspricht.

4. Vorrichtung nach Anspruch 3, bei der der Haupt-Aufzeichnungs- und/oder Wiedergabekopf (2) einen in bezug auf den Hilfs-Kopf (3) inversen Azimut hat und das wiedergegebene Videosignal (PBmain), das von dem Haupt-Aufzeichnungs- und/oder Wiedergabe-Kopf (2) gewonnen wird, dem wiedergegebenen Videosignal (PBsub), das von dem Hilfs-Kopf (3) gewonnen wird, um die Hälfte eines Horizontalsynchronisierungsintervalls voreilt.

5. Vorrichtung nach Anspruch 2, 3 oder 4, bei der der vorbestimmte Betrag der Verzögerung (α) so ausgewählt wird, daß die Verstärkungsfaktor- und Temperatur-Charakteristika der Verzögerungsschaltung (13) in Betracht gezogen werden, so daß die Verstärkungsfaktor- und Temperatur-Charakteristika das wiedergegebene Videosignal, das die Verzögerungsschaltung (13) durchläuft, nicht relativ zu dem wiedergegebenen Videosignal, das die Verzögerungsschaltung (13) nicht durchlaufen hat, beeinflussen.

6. Vorrichtung nach einem der Ansprüche 2 bis 5, bei der der vorbestimmte Betrag der Verzögerung (α) Null ist.

7. Vorrichtung nach Anspruch 1, bei der die Verzögerungsschaltung (23) ferner eine Vielzahl von Ausgangsabgriffen, über die wiedergegebene Videosignale mit indiviuellen Verzögerungen im wesentlichen in der Nähe der Hälfte eines Horizontalsynchronisierungsintervalls (0,5H) ausgegeben werden, und einen Signalauswahlschalter (27) umfaßt, der zwischen die Vielzahl von Ausgangsabgriffen und den zweiten Ausgangsanschluß der Verzögerungsschaltung (23) zum Auswählen irgendeines der wiedergegebenen Signale entsprechend der Verzerrung, die während der Auswahl des Hilfs-Kopfes (3) in der Wiedergabebetriebsweise mit veränderbarer Geschwindigkeit auftritt, geschaltet ist.

8. Vorrichtung nach Anspruch 1, die ein Verzerrungserfassungsmittel (31 bis 35) zum Erfassen einer Verzerrung der Phasenlage zwischen dem Haupt-Aufzeichnungs und/oder Wiedergabe-Kopf (2) und dem Hilfs-Kopf (3), das betreibbar ist, um ein Signal auszugeben, das bezeichnend dafür ist, und eine variable Verzögerungsschaltung (36) umfaßt, die auf das Ausgangssignal des Verzerrungserfassungsmittels (31 bis 35) anspricht und zwischen dem zweiten Ausgangsanschluß (44B) der Verzögerungsschaltung (44) und der Schalteinrichtung (6, 14) zum Erzeugen einer weiteren Verzögerung vorgesehen ist, die zu derjenigen des wiedergegebenen Signals an dem zweiten Ausgangsanschluß (44B) addiert wird, welche weitere Verzögerung entsprechend der Größe der Verzerrung verändert wird, die durch das Verzerrungserfassungsmittel (31 bis 35) erfaßt ist.

9. Vorrichtung nach Anspruch 8, bei der das Verzerrungserfassungsmittel jeweils zwei Leuchtdichtesignal-Demodulatoren (31, 32) und zwei Synchronisations-Trennschaltungen (33, 34), die die wiedergegebenen Videosignale (PBmain, PBsub) aufnehmen, welche von dem Haupt-Aufzeichnungs- und/oder Wiedergabe-Kopf (2) und dem Hilfs-Kopf (3) gewonnen werden, sowie einen Phasenkomparator (35) umfaßt, der betreibbar ist, um die Phasen zwischen den betreffenden Synchronisationssignalen zu vergleichen, die von den Synchronisations-Trennschaltungen (33, 34) gewonnen werden, und um ein Phasenfehlersignal an die variable Verzögerungsschaltung (36) auszugeben.

10. Verfahren zum magnetischen Aufzeichnen und/oder Wiedergeben, bei dem ein Videosignal in Übereinstimmung mit einem Aufzeichnungsformat aufgezeichnet wird, wobei die Horizontalsynchronisierungsabgleichung zwischen nebeneinanderliegenden Spuren eine Abweichung aufweist, welches Verfahren Schritte umfaßt zum
(a) Wählen zwischen Videosignalen (PBmain, PBsub), die durch einen Haupt-Aufzeichnungs- und/oder Wiedergabe-Kopf (2) oder einem Hilfs-Kopf (3) gewonnen werden, Verzögern des ausgewählten wiedergegebenen Videosignals um einen Betrag, der einem Horizontalsynchronisierungsintervall (1H) entspricht, und Ausgeben des verzögerten Signals über einen ersten Ausgangsanschluß (13C; 23C; 44C),
(b) Wählen zwischen den wiedergegebenen Videosignalen (PBmain, PBsub), Verzögern des ausgewählten wiedergegebenen Videosignals um einen Betrag, der der Abweichung der Horizontalsynchronisierungsabgleichung entspricht, und Ausgeben des wiedergegebenen Videosignals, das um den Betrag verzögert ist, der der Abweichung der Horizontalsynchronisierungsabgleichung entspricht, über einen zweiten Ausgangsanschluß (13B; 23B; 44B) und
(c) Auswählen des verzögerten wiedergegebenen Videosignals an dem ersten Ausgangsanschluß (13C; 23C; 44C) mit einer Verzögerung, die einem Horizontalsynchronisierungsintervall (1H) entspricht, während eines ersten Teils (Ta) eines Intervalls (Taub), während welchem der Hilfs-Kopf (3) ausgewählt ist, und dann Auswählen des wiedergegebenen Videosignals an dem zweiten Ausgangsanschluß (13B; 23B; 44B) mit der Verzögerung, die der Abweichung der Horizontalsynchronisierungsabgleichung entspricht, während des verbleibenden Teils (Tb) des Intervalls (Taub), während welchem der Hilfs-Kopf (3) in der Wiedergabebetriebsart mit veränderbarer Geschwindigkeit ausgewählt ist, und Ausgeben des ausgewählten verzögerten wiedergegebenen Videosignals mit Stetigkeit der Horizontalsynchronisierungsabgleichung in der Wiedergabebetriebsart mit veränderbarer Geschwindigkeit.

11. Verfahren nach Anspruch 10, das das Verzögern des ausgewählten wiedergegebenen Videosignals um einen vorbestimmten Betrag der Verzögerung (α) im wesentlichen in einem Bereich von Null bis zu der Abweichung der Horizontalsynchronisierungsabgleichung und das Ausgeben des Signals über einen dritten Ausgangsanschluß (13A; 23A; 44A) umfaßt und bei dem der Schritt zum Auswählen aus den verzögerten wiedergegebenen Videosignalen das Auswählen des verzögerten wiedergegebenen Videosignals mit dem vorbestimmten Betrag der Verzögerung (α) an dem dritten Ausgangsanschluß (13A; 23A; 44A) während eines Intervalls (Tc) umfaßt, wenn der Hilfs-Kopf (3) nicht als die Quelle des wiedergegebenen Videosignals, das in der Wiedergabebetriebsart mit veränderbarer Geschwindigkeit zu verzögern ist, ausgewählt ist.

12. Verfahren nach Anspruch 11, bei dem der Schritt zum Ausgeben des verzögerten wiedergegebenen Videosignals über den ersten Ausgangsanschluß (13C; 23C; 44C) das Ausgeben des wiedergegebenen Videosignals mit einer Verzögerung umfaßt, die einem Horizontalsynchronisierungsintervall (1H) plus dem vorbestimmten Betrag der Verzögerung (α) entspricht, und der Schritt zum Ausgeben des verzögerten wiedergegebenen Videosignals über den zweiten Ausgangsanschluß (13B; 23B; 44B) das Ausgeben des wiedergegebenen Videosignals mit einer Verzögerung umfaßt, die der Hälfte einer Horizontalsynchronisierungsintervall (0,5H-)Abweichung der Horizontalsynchronisierungsabgleichung plus dem vorbestimmten Betrag der Verzögerung (α) entspricht.

13. Verfahren nach Anspruch 12, bei dem der Haupt-Aufzeichnungs- und/oder Wiedergabe-Kopf (2) einen in bezug auf den Hilfs-Kopf (3) inversen Azimut hat und das wiedergegebene Videosignal (PBmain), das von dem Haupt-Aufzeichnungs- und/oder Wiedergabe-Kopf (2) ausgewählt ist, dem wiedergegebenen Videosignal (PBsub), das von dem Hilfs-Kopf (3) ausgewählt ist, um die Hälfte eines Horizontalsynchronisierungsintervalls (0,5H) voreilt.

14. Verfahren nach Anspruch 12 oder 13, bei dem der vorbestimmte Betrag der Verzögerung (α) Null ist.

15. Verfahren nach Anspruch 10, das das Ausgeben des wiedergegebenen Videosignals über eine Vielzahl von Ausgangsabgriffen der Verzögerungsschaltung (23) mit individuellen Verzögerungsbeträgen im wesentlichen in der Nähe des Hälfte eines Horizontalsynchronisierungsintervalls (0,5H) und das Auswählen irgendeines der wiedergegebenen Signale umfaßt, die an den Ausgangsabgriffen entsprechend der Verzerrung bereitgestellt werden, welche während der Auswahl des Hilfs-Kopfes (3) als die Quelle des wiedergegebenen Videosignals auftritt, das in der Wiedergabebetriebsart mit veränderbarer Geschwindigkeit zu verzögern ist.

16. Verfahren nach Anspruch 10, das das Erfassen (31 bis 35) einer Verzerrung der Phasenlage zwischen dem Haupt-Aufzeichnungs- und/oder Wiedergabe-Kopf (2) und dem Hilfs-Kopf (3) und das Erzeugen (36) einer weiteren Verzögerung umfaßt, die zu derjenigen des wiedergegebenen Signals an dem zweiten Ausgangsanschluß (44B) addiert wird, welche weitere Verzögerung entsprechend der Größe der erfaßten Verzerrung verändert wird.

17. Verfahren nach Anspruch 16, bei dem der Verzerrungs-Erfassungsschritt das Demodulieren (31, 32) der Leuchtdichtesignale aus den wiedergegebenen Videosignalen, die von dem Haupt-Aufzeichnungs- und/oder Wiedergabe-Kopf (2) und dem Hilfs-Kopf (3) gewonnen werden, das Trennen (33, 34) der Synchronisierungssignale von jedem der demodulierten Leuchtdichtesignale und das Vergleichen (35) der Phasen zwischen den betreffenden Synchronisierungssignalen, um die Verzerrung zu erfassen, umfaßt.

## Revendications

1. Dispositif d'enregistrement et/ou de reproduction magnétique comportant une tête magnétique d'enregistrement et/ou de lecture principale (2) et pouvant être actionné dans un mode reproduction à vitesse variable dans lequel un signal vidéo est enregistré en relation avec un format d'enregistrement dans lequel l'alignement de synchronisation horizontale est dévié entre des pistes jointives, le dispositif comprenant :
(a) au moins une tête magnétique tournante auxiliaire (3) qui peut être utilisée de façon sélective en lieu et place de la tête magnétique d'enregistrement et/ou de lecture principale (2) dans le mode reproduction à vitesse variable ;
(b) un circuit de retard (13 ; 23 ; 44) pour recevoir un signal vidéo reproduit et pour le retarder d'une valeur correspondant à un intervalle de synchronisation horizontale (1H), comportant une première borne de sortie (13C ; 23C ; 44C) au travers de laquelle le signal vidéo reproduit retardé d'un intervalle de synchronisation horizontale est émis en sortie, le circuit de retard (13 ; 23 ; 44) pouvant être également actionné pour retarder le signal vidéo reproduit d'un retard correspondant à la déviation de l'alignement de synchronisation horizontale, et comportant une seconde borne de sortie (13B ; 23B ; 44B) au travers de laquelle le signal vidéo reproduit retardé de la valeur correspondant à la déviation de l'alignement de synchronisation horizontale est émis en sortie ; et
(c) un circuit de commutation (6, 14) qui peut être actionné en séquence pour sélectionner le signal vidéo reproduit, parmi ceux reproduits par la tête magnétique principale (2) et par la tête magnétique auxiliaire (3), qui doit être envoyé au circuit de retard (13 ; 23 ; 44) et également pour sélectionner le signal vidéo reproduit en provenance de la première borne de sortie (13C ; 23C ; 44C) du circuit de retard (13 ; 23 ; 44) qui produit un retard d'un intervalle de synchronisation horizontale (1H) pendant une première partie (Ta) d'un intervalle (Tsub) durant laquelle la tête auxiliaire (3) est sélectionnée puis pour sélectionner le signal vidéo reproduit en provenance de la seconde borne de sortie (13B ; 23B ; 44B) du circuit de retard (13 ; 23 ; 44) qui produit un retard correspondant à la déviation de l'alignement de synchronisation horizontale pendant la partie restante (Tb) de l'intervalle (Tsub) pendant laquelle la tête auxiliaire (3) est sélectionnée dans le mode reproduction à vitesse variable de manière à émettre en sortie le signal vidéo reproduit avec une continuité de l'alignement de synchronisation horizontale dans le mode reproduction à vitesse variable.

2. Dispositif selon la revendication 1, dans lequel le circuit de retard (13 ; 23 ; 44) comporte une troisième borne de sortie (13A ; 23A ; 44A) qui produit le signal vidéo reproduit retardé d'un retard prédéterminé (α) qui s'inscrit sensiblement dans une plage qui va de zéro à la déviation de l'alignement de synchronisation horizontale, et dans lequel le circuit de commutation (6, 14) peut être actionné pour sélectionner le signal vidéo reproduit avec le retard prédéterminé (α) dérivé de la troisième borne de sortie du circuit de retard pendant un autre intervalle (Tc) durant lequel la tête auxiliaire (3) n'est pas sélectionnée dans le mode reproduction à vitesse variable.

3. Dispositif selon la revendication 2, dans lequel la première borne de sortie (13C ; 23C ; 44C) du circuit de retard (13 ; 23 ; 44) peut être actionnée pour émettre en sortie le signal vidéo reproduit retardé avec un retard correspondant à un intervalle de synchronisation horizontale (1H) plus le retard prédéterminé (α), et sa seconde borne de sortie (13B ; 23B ; 44B) peut être actionnée pour émettre en sortie le signal vidéo reproduit retardé avec un retard correspondant à la moitié d'une déviation d'intervalle de synchronisation horizontale (0,5H) de l'alignement de synchronisation horizontale plus le retard prédéterminé (α).

4. Dispositif selon la revendication 3, dans lequel la tête d'enregistrement et/ou de lecture principale (2) présente un azimut inverse par rapport à la tête auxiliaire (3) et le signal vidéo reproduit (PBmain) délivré depuis la tête d'enregistrement et/ou de lecture principale (2) est en avance d'une moitié d'un intervalle de synchronisation horizontale (0,5H) par rapport au signal vidéo reproduit (PBsub) dérivé de la tête auxiliaire (3).

5. Dispositif selon la revendication 2, 3 ou 4, dans lequel le retard prédéterminé (α) est choisi avec prise en compte de caractéristiques de gain et de température du circuit de retard (13) de telle sorte que les caractéristiques de gain et de température n'affectent pas le signal vidéo reproduit passé au travers du circuit de retard (13) par rapport au signal vidéo reproduit non passé au travers du circuit de retard (13).

6. Dispositif selon l'une quelconque des revendications 2 à 5, dans lequel le retard prédéterminé (α) vaut zéro.

7. Dispositif selon la revendication 1, dans lequel le circuit de retard (23) comprend en outre une pluralité de connexions de sortie à partie desquelles les signaux vidéo reproduits sont émis en sortie avec des retards individuels sensiblement au voisinage d'une moitié d'un intervalle de synchronisation horizontale (0,5H) et un commutateur de sélection de signal (27) connecté entre la pluralité de connexions de sortie et la seconde borne de sortie du circuit de retard (23) pour sélectionner l'un quelconque des signaux reproduits dérivés des connexions de sortie conformément à une obliquité se produisant pendant la sélection de la tête auxiliaire (3) dans le mode reproduction à vitesse variable.

8. Dispositif selon la revendication 1, comprenant un moyen de détection d'obliquité (31 à 35) pour détecter une obliquité entre la tête d'enregistrement et/ou de lecture principale (2) et la tête auxiliaire (3) et pouvant fonctionner pour émettre en sortie un signal indicatif de celle-ci, et un circuit de retard variable (36) sensible au signal de sortie en provenance du moyen de détection d'obliquité (31 à 35) et qui est prévu entre la seconde borne de sortie (44B) du circuit de retard (44) et le circuit de commutation (6, 14) pour produire un autre retard ajouté au signal reproduit à partir de la seconde borne de sortie (44B), cet autre retard variant en relation avec l'amplitude de l'obliquité détectée par le moyen de détection d'obliquité (31 à 35).

9. Dispositif selon la revendication 8, dans lequel le moyen de détection d'obliquité comprend deux démodulateurs de signal de luminance (31, 32) et deux circuits de séparation de synchronisation (33, 34) qui reçoivent respectivement les signaux vidéo reproduits (PBmain, PBsub) dérivés de la tête d'enregistrement et/ou de lecture principale (2) et de la tête auxiliaire (3), et un comparateur de phase (35) qui peut être actionné pour comparer les phases entre les signaux de synchronisation respectifs dérivés des circuits de séparation de synchronisation (33, 34) et pour émettre en sortie un signal d'erreur de phase pour le circuit de retard variable (36).

10. Procédé d'enregistrement et/ou de reproduction magnétique dans lequel un signal vidéo est enregistré conformément à un format d'enregistrement dans lequel l'alignement de synchronisation horizontale est dévié entre des pistes jointives, le procédé comprenant les étapes de :
(a) sélection entre des signaux vidéo (PBmain, PBsub) reproduits par une tête d'enregistrement et/ou de lecture principale (2) ou par une tête auxiliaire (3), retardement du signal vidéo reproduit sélectionné d'une valeur correspondant à un intervalle de synchronisation horizontale (1H) et émission en sortie du signal retardé depuis une première borne de sortie (13C ; 23C ; 44C) ;
(b) sélection entre les signaux vidéo reproduits (PBmain, PBsub), retardement du signal vidéo reproduit sélectionné d'une valeur correspondant à la déviation de l'alignement de synchronisation horizontale et émission en sortie du signal vidéo reproduit retardé de la valeur correspondant à la déviation de l'alignement de synchronisation horizontale depuis une seconde borne de sortie (13B ; 23B ; 44B) ; et
(c) sélection du signal vidéo reproduit retardé en provenance de la première borne de sortie (13C ; 23C ; 44C) avec un retard correspondant à un intervalle de synchronisation horizontale (1H) pendant une première partie (Ta) d'un intervalle (Tsub) pendant laquelle la tête auxiliaire (3) est sélectionnée puis sélection du signal vidéo reproduit en provenance de la seconde borne de sortie (13B ; 23B ; 44B) avec le retard correspondant à la déviation de l'alignement de synchronisation horizontale pendant la partie restante (Tb) de l'intervalle (Tsub) pendant laquelle la tête auxiliaire (3) est sélectionnée dans le mode reproduction à vitesse variable et émission en sortie du signal vidéo reproduit retardé sélectionné avec un alignement de synchronisation horizontale continu dans le mode reproduction à vitesse variable.

11. Procédé selon la revendication 10, comprenant le retardement du signal vidéo reproduit sélectionné d'un retard prédéterminé (α) qui s'inscrit sensiblement dans une plage qui va de zéro à la déviation de l'alignement de synchronisation horizontale et l'émission en sortie dudit signal au niveau d'une troisième borne de sortie (13A ; 23A ; 44A) et dans lequel l'étape de sélection parmi les signaux vidéo reproduits retardés comprend la sélection du signal vidéo reproduit retardé avec le retard prédéterminé (α) en provenance de la troisième borne de sortie (13A ; 23A ; 44A) pendant un intervalle (Tc) durant lequel la tête auxiliaire (3) n'est pas sélectionnée en tant que source des signaux vidéo reproduits qui doivent être retardés dans le mode reproduction à vitesse variable.

12. Procédé selon la revendication 11, dans lequel l'étape d'émission en sortie du signal vidéo reproduit retardé depuis la première borne de sortie (13C ; 23C ; 44C) comprend l'émission en sortie du signal vidéo reproduit avec un retard correspondant à un intervalle de synchronisation horizontale (1H) plus le retard prédéterminé (α), et l'étape d'émission en sortie du signal vidéo reproduit retardé depuis la seconde borne de sortie (13B ; 23B ; 44B) comprend l'émission en sortie du signal vidéo reproduit avec un retard correspondant à une moitié d'une déviation d'intervalle de synchronisation horizontale (0,5H) de l'alignement de synchronisation horizontale plus le retard prédéterminé (α).

13. Procédé selon la revendication 12, dans lequel la tête d'enregistrement et/ou de lecture principale (2) présente un azimut inverse par rapport à la tête auxiliaire (3) et le signal vidéo reproduit (PBmain) sélectionné depuis la tête d'enregistrement et/ou de lecture principale (2) est en avance d'une moitié d'un intervalle de synchronisation horizontale (0,5H) du signal vidéo reproduit (PBsub) sélectionné depuis la tête auxiliaire (3).

14. Procédé selon la revendication 12 ou 13, dans lequel le retard prédéterminé (α) vaut zéro.

15. Procédé selon la revendication 10, comprenant l'émission en sortie du signal vidéo reproduit depuis une pluralité de connexions de sortie du circuit de retard (23) avec des valeurs de retard individuelles sensiblement au voisinage d'une moitié d'un intervalle de synchronisation horizontale (0,5H) et la sélection de l'un quelconque des signaux reproduits dérivés depuis les connexions de sortie en relation avec une obliquité se produisant pendant la sélection de la tête auxiliaire (3) en tant que source du signal vidéo reproduit qui doit être retardé dans le mode reproduction à vitesse variable.

16. Procédé selon la revendication 10, comprenant la détection (31 à 35) d'une obliquité entre la tête d'enregistrement et/ou de lecture principale (2) et la tête auxiliaire (3) et la fourniture (36) d'un autre retard ajouté au signal vidéo reproduit en provenance de la seconde borne de sortie (44B), lequel autre retard est modifié conformément à l'amplitude de l'obliquité détectée.

17. Procédé selon la revendication 16, dans lequel l'étape de détection d'obliquité comprend la démodulation (31, 32) des signaux de luminance en provenance des signaux vidéo reproduits dérivés de la tête d'enregistrement et/ou de lecture principale (2) et de la tête auxiliaire (3), la séparation (33, 34) des signaux de synchronisation à partir de chacun des signaux de luminance démodulés et la comparaison (35) des phases entre les signaux de synchronisation respectifs afin de détecter l'obliquité.
